# EUROPÄISCHE PATENTSCHRIFT

(11) **EP 1 338 195 B1**
(45) Veröffentlichungstag und Bekanntmachung des Hinweises auf die Patenterteilung: **11.05.2005**
(21) Anmeldenummer: 03004107.3
(22) Anmeldetag: 26.02.2003
(51) Int. Cl.: A01K 1/00

(54) **Stall**
Barn
Etable

(30) Priorität: 26.02.2002 DE 10208298
(43) Veröffentlichungstag der Anmeldung: 27.08.2003
(73) Patentinhaber: Bullermann, Siegbert, 26169 Markhausen (DE); Graue, Michael, 26169 Friesoythe (DE); Buschenlange, Günther, 49681 Garrel (DE)
(72) Erfinder: Bullermann, Siegbert, 26169 Markhausen (DE); Graue, Michael, 26169 Friesoythe (DE); Buschenlange, Günther, 49681 Garrel (DE)
(74) Vertreter: Eisenführ, Speiser & Partner

(56) Entgegenhaltungen:
- FR-A- 1 539 903
- US-A- 3 694 222
- US-A- 4 184 538

## Beschreibung

Die Erfindung betrifft einen Stall insbesondere für Nutztiere. Solche Ställe bestehen bekanntlich aus einem Stallgebäude, welches regelmäßig für die Aufnahme und die Haltung des jeweils betroffenen Nutztieres hergerichtet ist. Im Bedarfsfall ist auch im Bodenbereich des Stallgebäudes eine Einrichtung zur Aufnahme der Fäkalien der Nutztiere vorgesehen.

Solche Stallgebäude müssen jedoch nicht nur einen einfachen Aufenthaltsraum für das Nutzvieh bieten, sondern es muss auch dem Nutzvieh ein optimales Klima bereitgestellt werden, damit dieses auch unter Tierschutzgesichtspunkten ein optimales Lebensumfeld hat, was darüber hinaus der Gesundheit der Tiere nicht nur zuträglich ist, sondern auch ihr Wachstum fördert.

Ein solches optimales Stallklima für das Tier als auch für den Menschen, der in dem Stall arbeitet, bedeutet, dass vor allem die wesentlichen Klimaparameter wie Temperatur, Feuchtigkeit, Luftaustauschrate, Frischluftanteil, Sauerstoffgehalt, Schadstoffbelastung usw. in einem möglich optimierten Bereich gehalten wird, wobei dass jeweilige Klima auf die Haltung des betroffenen Tieres angepasst ist.

Oftmals muss dabei in der kalten Jahreszeit auch dafür gesorgt werden, dass nicht kalte Außenluft in das Innere des Stalls gelangt, wenn die dort untergebrachten Tiere dieser kalten Außenluft nicht ausgesetzt werden dürfen. Dies ist beispielsweise bei jungem Geflügel (z.B. Puten) der Fall, welches nach der Einstallung regelmäßig eine Temperatur von wenigsten von 22° bis 24° Grad Celsius benötigt.

Die bisherigen technischen Möglichkeiten zur Einstellung eines optimalen Stallklimas belasten zunehmend in ungewöhnlicherweise die Betriebskosten für den Stallbetrieb. So betragen beispielsweise allein die Wärmekosten bei der Schweinehaltung pro Schwein und Durchgang z.Z. etwa 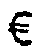 1,25 bis 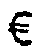 2,50 (je nach Jahreszeit).

In der US-A-4 184 538 wird ein Stall für Nutztiere mit Wärmeaustauchröhren, die eine Wiederverwendung der Wärme der Tiere ermöglichen, offenbart.

Es ist Ziel der vorliegenden Erfindung, diese Wärmekosten deutlich zu reduzieren, d.h. beispielsweise auf einen Wert von 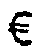 0,75 pro Schwein und Durchgang. Darüber hinaus soll die Geruchsbelästigung, welche mit der Tiermast regelmäßig einhergeht, reduziert werden und es sollen darüber hinaus die bisherigen Nachteile bekannter Stallklimaeinrichtungen vermieden werden.

Die Erfindung löst die Aufgabe durch eine Stallkonzeption mit den Merkmalen nach Anspruch 1. Vorteilhafte Weiterbildung sind im Unteranspruch beschrieben.

Der erfindungsgemäße Stall besteht aus zwei voneinander getrennten jedoch ineinander verschachtelten Baueinheiten, nämlich dem Stallgebäude und einer Stallinnenzelle. Das Stallgebäude besteht hierbei aus gut wärmeisolierten Baumaterial (z.B. Holzrahmenbau) während die Stallinnenzelle, die innerhalb des Stallgebäudes untergebracht ist aus einer separaten Baueinheit besteht, welche eine gute Wärmeleitfähigkeit aufweist. Das Stallgebäude als auch die Stallinnenzelle fußen auf dem gleichen Fundament, bevorzugt besteht aber sowohl seitlich von der Stallinnenzelle als auch über der Stallinnenzelle ein Zwischenraum, (Hohlraum) Dach des Stallgebäudes.

Mit der erfindungsgemäßen Stallkonzeption ist es möglich, die Mehrkosten für die im gesamten Stallbetrieb notwendigen Wärmekosten ganz erheblich zu reduzieren, wobei die Bildung von Kondensfeuchtigkeit verhindert wird und gleichwohl eine sehr gute Frischluftzuführung ermöglicht ist.

Die erfindungsgemäß Stallkonzeption erinnert im gewissen Masse an eine "Haus im Haus" Konstruktion. Hierbei hat das Stallgebäude ein ähnliches Aussehen wie bisherige Ställe, während bevorzugt die Stallinnenzelle eher an einen Kasten erinnert, so dass seitlich von der Stallinnenzelle ein Hohlraum gebildet ist, durch welchen Zuluft in den Raum zwischen Stallinnenzelle und Stallgebäude wandern kann. Da die Stallinnenzelle die darin befindliche Wärme aufgrund der guten Wärmeleitfähigkeit gut an die Außenumgebung abgibt, wird die von außen heranströmende Luft bei Eintritt in den Hohlraum zwischen der Stallinnenzelle und Stallgebäude bereits erwärmt und sammelt sich bevorzugt im Dachgiebelraum, also dem Raum oberhalb der Stallinnenzelle und unterhalb des Dachs des Stallgebäudes.

Die gesamte Stallinnnenzelle stellt aufgrund ihrer Wärmeleitfähigkeit quasi einen Wärmetauscher mit einer sehr großen Wärmetauschfläche dar.

Je länger die frische Zuluft von außen sich im Dachgiebelraum befindet, um so mehr erwärmt sich die Luft dort und gleicht sich temperaturmäßig der Luft in der Stallinnenzelle an.

Die Funktion der Wandung der Stallinnenzelle nach Art eines Wärmetauschers hat auch den Vorteil, dass mit einem relativ geringen Temperatur-Zeit- Gradient (δ T/t ist kleiner) die Temperatur unterschiedlich ausgeglichen werden und somit jede Kondensfeuchtigkeitsbildung an der Zwischenwandung (Stallinnenzellenwandung) vermieden wird.

Zur Erhöhung des Wärmedurchgangs durch die Wandung der Stallinnnezelle kann die Oberfläche der Stallinnenwandung mit oberflächenvergrößernden Elementen versehen sein. Die Stallinnwandung kann beispielsweise aus gezackten, gewellten oder trapezförmigen geformten Materialien hergestellt werden.

Bevorzugt wird im Stallinnenraum ein Absaugsystem angeordnet, welches eine bestimmbare Menge der Stallluft in der Stallinnenzelle absaugt und diese nach außen abführt. Dadurch stellt sich in der Stallinnenzelle ein Unterdruck ein, welcher durch Zuströmung von vorerwärmter Zuluft aus dem Dachgiebelraum ausgeglichen werden kann. Für die Zuströmung dieser vorerwärmten Zuluft sind in der Decke der Stallinnenzelle Zulufteintrittsöffnungen vorgesehen, wobei deren Größe so eingestellt ist oder eingestellt werden kann, dass sich die Temperatur in der Stallinnenzelle auf einem gewünschten Niveau gehalten wird und sich stets ausreichend Frischluft in der Stallinnenzelle befindet.

Die Erfindung ist nachfolgend anhand eines dargestelltes Ausführungsbeispiels näher erläutert.

Es zeigen:
- Figur 1: einen Querschnitt durch eine erfindungsgemäßen Stall,
- Figur 2: einen Querschnitt durch den Stall nach Figur 1 mit weiteren detailreichen Ausführungen.

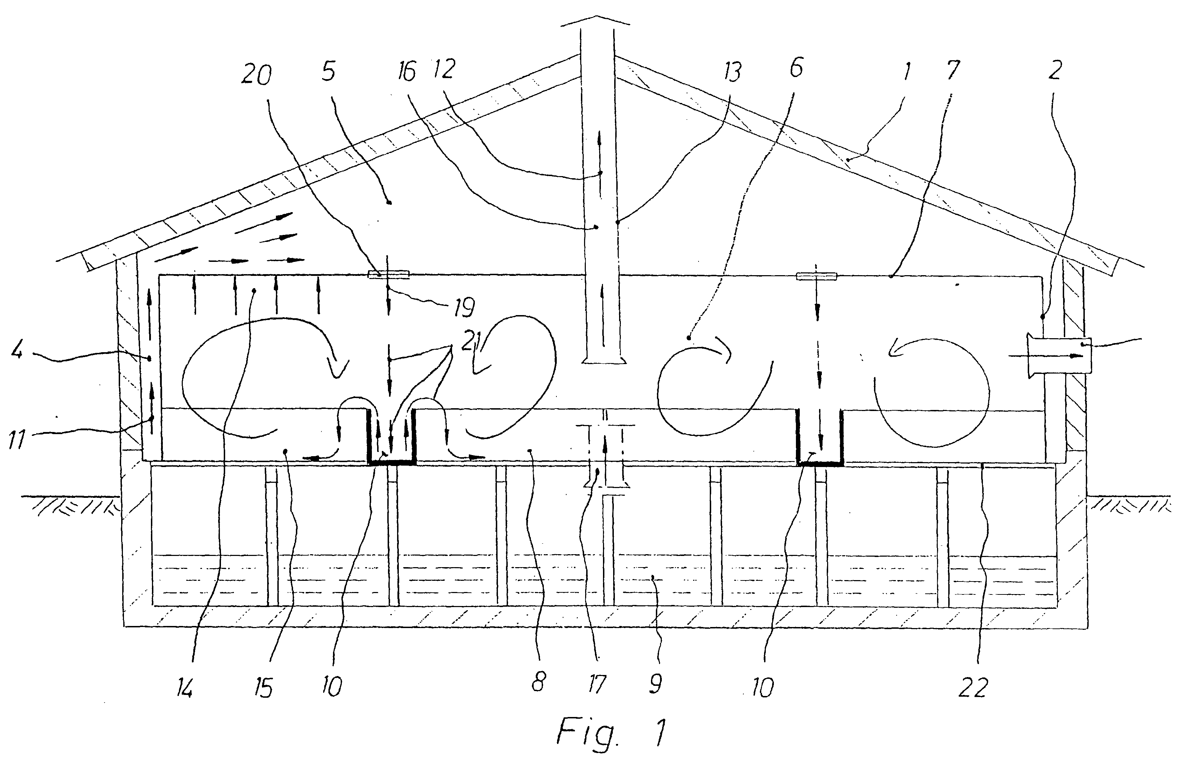

In Figur 1 ist der erfindungsgemäße Stall dargestellt, welcher aus dem äußeren Stallgebäude und einer Innenzelle 2 besteht. Zwischen der Stallinnenzelle 2, welche im Wesentlichen quaderförmig aufgebaut ist, und im äußeren Stallgebäude gibt es sowohl seitlich als auch oberhalb der Stallinnenzelle die Zwischenräume 4 und 5, nachfolgend auch als Wandhohlraum und Dachgiebelraum bezeichnet. Mit den Pfeilen in der Figur 1 ist dargestellt, wie die Luft bewegt wird. Das Stallaußengebäude besteht aus einem gut isolierten Baumaterial, während die Stallinnenzelle aus einer separaten Baueinheit besteht, welche eine gute Wärmeleitfähigkeit aufweist und dadurch die Bildung von Kondensfeuchtigkeit verhindert und gegenüber der Außenluft gut abgedichtet ist, insbesondere hinsichtlich auch gegenüber der Außenwelt winddicht ist. Im Bereich der Wandhohlräume 4 zwischen der Stallinnenzelle und der Außenwand des Stallgebäudes 1 sind Öffnungen vorgesehen, über die Zuluft von außen in den Stallinnenraum tritt. Hierbei kann es sich um reine Außenluft handeln oder um solche, die zuvor in einem Klimavorraum (nicht dargestellt) auf einen bevorzugt Wert erkühlt/erwärmt oder befeuchtet worden ist. Somit kann über den Klimavorraum ein gewünschtes Luftgemisch hergestellt werden, welches aus einem Teil von aus dem Stallinnenraum angesaugter Luft und frischer Außenluft besteht.

Neben der Erwärmung von Zuluft im Klimavorraum kann eine weitere Erwärmung dadurch stattfinden, dass die im Dachgiebelraum 5 befindliche Luft unten durch Transmission der Wärme durch die Stallinnenzelle weiter erwärmt wird. Dabei fungiert die äußere Wand der Stallinnenzelle als Wärmetauscher, wobei aufgrund der sehr großen Fläche dieser Wärmetauscherfläche nur ein geringer Temperaturunterschied ausreichend ist, um eine genügende Wärme der Luft im Dachgiebelraum zuzuführen und diese dann entsprechend langsam zu erwärmen, was jedweder Kondenswasserbildung entgegenwirkt.

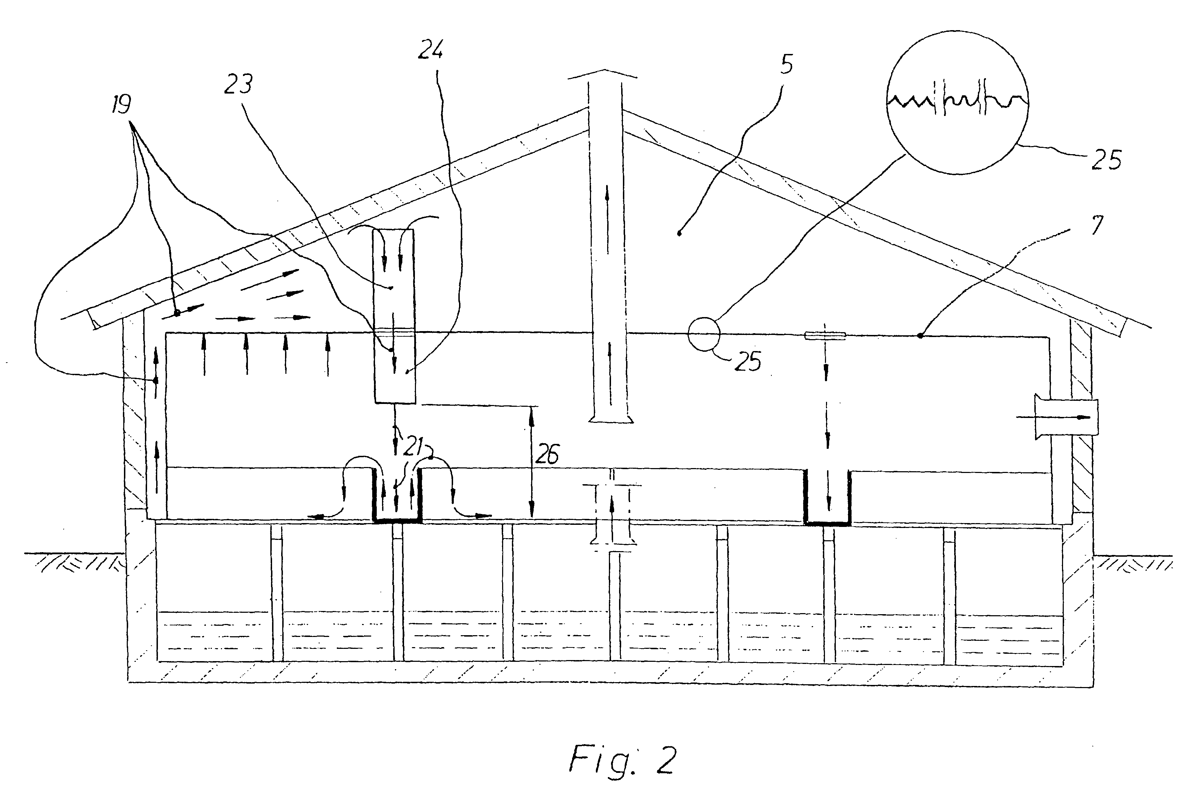

Die Zwischendecke 7 der Stallinnenzelle kann hierbei bevorzugt aus glatten, gezackten, gewellten oder trapezförmig geformten Materialien (Figur 2) hergestellt sein. Auch andere Möglichkeiten zur Vergrößerung der Oberfläche der Stallinnenzellenwand sind möglich.

Im Stallinnenraum 6 der Stallinnenzelle wird ein gleichmäßiger Luftunterdruck mittels Absaugsystemen 18 eingestellt. Dies geschieht vorzugsweise durch eine Oberflurabsaugung 16 oder Unterflurabsaugung 17 oder Wandabsaugung 18, in dem die Stallluft aus der Stallinnenzelle heraustransportiert wird. Der sich in der Stallinnenzelle einstellende Unterdruck erzeugt somit eine gleichmäßige Sogwirkung. Durch diese Sogwirkung strömt die im Dachgiebelraum 5 befindliche Zuluft 19 durch Zulufteintrittsöffnungen 20 in den Stallinnenraum 6 ein. Von den Zulufteintrittsöffnungen können mehrere vorhanden sein, wobei diese bevorzugt so in der Decke der Stallinnenzelle ausbildet sind, dass sie sich oberhalb der Gänge innerhalb der Stallinnenzelle befinden. Die Gänge in der Stallinnenzelle sind die üblichen Stallgänge, die benötigt werden, damit das Vieh im Stall vom Stallpersonal versorgt werden kann, die Gänge selbst bilden die Grenze zum Aufenthaltsplatz der Nutztiere im Stall. Die Gänge selbst sind wie nach Art einer Rinne ausgebildet, d.h. sie weisen beidseitig eine Erhöhung auf, so dass in den Gang gelangte Luft aus diesem nur entweichen kann, wenn die Luft über dem Rinnenrand kommt (Figur 1, Pfeile 21). Die Zulufteintrittsöffnungen lassen sich mittels entsprechender Schieber oder anderer Mittel hinsichtlich ihrer Lufteintrittsflächen auf ein gewünschtes Maß einstellen, so dass der Öffnungsgrad zwischen 0 % und 100 % betragen kann.

Die vorerwärmte einströmende Zuluft 19 sinkt aufgrund des höheren spezifischen Gewichts (da sie kälter ist als die Stallluft im Deckenbereich 14 der Zelle) schwerkraftfolgend senkrecht nach unten auf den Gang 10. Da der Gang nach Art einer Rinne luftundurchlässig ausgebildet ist, füllt die Zuluft zunächst den Gang, verbreitet sich dann nach Überlaufen der Gangrinne vorzugsweise über die beiden seitlichen Gangbegrenzungen in Richtung der Nutztierlebensräume, wobei sich automatisch eine Luftzirkulation einstellt, durch die herabfallende Zuluft 19 auch in Zirkulation aufgrund des sich einstellenden Injektions/Mitnahmeeffekts in Gang gehalten wird. Durch die vorgenannte Maßnahme ist insbesondere der Gang des Stalls stets mit Frischluft gut versorgt, was den Aufenthalt des Personals dort erheblich erleichtert und auch einen längeren Aufenthalt im Stall ermöglicht.

Ferner wird durch die Zuluftführung im Stall bewirkt, dass die vorkonditionierte Zuluft 19 sich vorzugsweise zunächst horizontal im Bereich der Nutztierlebensräume ausbreitet und dort die schadstoffbelastete, sauerstoffarme Luft verdrängt und sich mit dieser gleichmäßig vermischt.

Das Ausmaß des Luftunterdrucks im Stallinnenraum kann auch durch Änderung des Öffnungsgrades der Zulufteintrittsöffnungen oder durch Erhöhung der Absauggeschwindigkeit auf ein gewünschtes Maß geändert werden.

Besonders ermöglicht die erfindungsgemäße Stallkonstruktion, dass insgesamt ein Klimabetrieb ermöglicht wird, welcher frei ist vom Abluftpunkt innerhalb des Stalls.

Durch die strikte Trennung der Baueinheiten - Stallinnenzelle und Stallaußenzelle - in eine äußere stabile, gut isolierte Gebäudehülle und eine getrennte Stallinnenzelle werden zwischen Außenhülle und der Stallinnenzelle Hohlräume gebildet (Wandhohlräume, Dachgiebelraum usw.), in welche mittels eines Wärmetauscherprinzips die zugeführte Luft langsam von der Stallluft erwärmt wird.

Damit kann ein ganzheitliches Klimaverfahren für Ställe und Stallgebäude erreicht werden, wobei ein optimales Stallklima für Mensch und Tier geschaffen werden kann und gleichzeitig erhebliche Energiemengen gegenüber bisherigen Stallkonzeptionen eingespart werden können.

Das Grundprinzip der Erfindung beruht darauf, dass in einem Stallgebäude ein Unterdruck erzeugt wird, welcher im Stallinnenraum 6 gleichmäßig zur Wirkung kommt. Dieser Effekt wird dadurch erzielt, dass die Stallinnenluft mittels Absaugsystem abtransportiert wird. Eine weitere Voraussetzung für das Entstehen des Unterdrucks ist eine nahezu luftdichte Stallinnenzelle 2. In Folge dieses Unterdrucks entsteht eine saugartige Wirkung im Stallinnenraum 6. Mittels dieser Sogwirkung wird die vorgewärmte Zuluft 4, 19 in den Stallinnenraum 6 transportiert. Diese einströmende Zuluft ist naturgemäß kälter als die Stallluft im Deckenbereich 14 der Stallinnenzelle. Aufgrund dieser Tatsache hat sie ein höheres spezifisches Gewicht und fällt der Schwerkraft folgend entsprechend senkrecht hinunter in den Bereich der Gänge 10 der Stallinnenzelle. Der Lufteintritt der Zuluft erfolgt über sog. Zulufteintrittsöffnungen 20, welche vorzugsweise oberhalb der Gänge 10 in der Zwischendecke 7 der Stallinnenzelle eingebaut sind. Diese Zulufteintrittsöffnungen sind vom Öffnungsgrad her verstellbar, d.h. die Öffnung kann von 0 % bis 100 % verstellt werden. Dies geschieht entweder auf mechanischem oder elektromechanischem oder pneumatischem Wege. Vorzugsweise handelt es sich hierbei um einzelne Lufteintrittsöffnungen, die voneinander beabstandet sind und deren Anzahl und Größe der jeweiligen Stallgröße angepasst ist.

Die vorgewärmte Zuluft 19 füllt die als Rinnen ausgebildeten Gänge langsam auf. Die Zuluft steigt innerhalb der Gänge soweit nach oben, bis die beiden seitlichen Gangbegrenzungen erreicht werden, also die Rinne gefüllt ist. Im weiteren Verlauf der Zuluftführung 21 wird diese vorkonditionierte Luft 19 sich vorzugsweise in horizontaler Richtung über den gesamten Nutztierlebensraum ausbreiten und die dort vorhandene schadstoffbelastete, sauerstoffarme Luft verdrängen oder sich mit dieser gleichmäßig vermischen. Diese Methode der Luftzuführung hat zur Folge, dass sich sowohl im Gangbereich als auch im Bereich der Nutztierlebensräume ein optimales Stallklima entwickelt. Im Bereich der Gänge sorgt die ständig langsam fallende Zuluft dafür, dass keine Zugluftbelastung für das Bedienpersonal erfolgt. Darüber hinaus ist das System so ausgelegt, dass insbesondere im Bereich des Nutztierlebensraums 8 keine zu hohe Luftbewegung herrscht, um auch hier Zugluftbelastung für das Tier zu verhindern, wobei jedoch stets eine gewisse Luftzirkulation zugelassen wird, die sich jedoch nicht durch Zwangskonvektion, sondern durch natürliche Konvektion einstellt.

Hinsichtlich der Erwärmung der Zuluft 11 ist folgende kontrollierte Luftführung vorgesehen: Die Außenluft wird zunächst in einen Vorklimaraum (nicht dargestellt) geführt. Innerhalb dieses Raumes besteht die Möglichkeit, die Luft aufzuwärmen bzw. zu befeuchten usw. Weiterhin kann die Luft sich hier beruhigen und unterliegt nicht den direkten atmosphärischen Windeinflüssen. Nach dieser Beruhigungszone bzw. Konditionierungszone wird die Luft zunächst durch den Wandhohlraum 4 geleitet und unmittelbar danach strömt die Zuluft in den anschließenden Dachgiebelraum 5 ein. Der Dachgiebelraum 5 befindet sich in dem Bereich zwischen der Zwischendecke 7 und dem Dach des Stallgebäudes 1, vorzugsweise handelt es sich hierbei um ein Satteldach. Dieser Dachgiebelraum 5 wird als großvolumiger, temporärer Luftspeicher für die Zuluft genutzt. Die warme Stallluft im Deckenbereich 14 bewirkt, dass die Zwischendecke 7 aufgewärmt wird. Mittels des Prinzips des Wärmeübergangs/Wärmetauschers wird diese Wärme an die darüber zwischengelagerte Zuluft zum Teil weitergegeben. Da die Zuluft in diesem Bereich über länger Verweilzeit verbleibt, erfolgt hier eine langsamere Erwärmung vor Eintritt in den eigentlichen Stallinnenraum 6. Die Zwischendecke 7 der Stallinnenzelle 2 ist so ausgebildet, dass sie eine sehr hohe Wärmeleitfähigkeit aufweist.

Im Bereich der Abluft 12 stehen grundsätzliche Varianten zur Verfügung, vorzugsweise eine Oberflurabsaugung 16, eine Unterflurabsaugung 17, angeordnet im Bereich des Güllekellers, eine Wandabsaugung 18 oder eine Kombination dieser vorgenannten Lösungen. Welche dieser drei Absaugsysteme zur Anwendung kommt, ist für die Erzeugung des Unterdrucks im Stallinnenraum 6 sekundär.

Hinsichtlich der automatischen Klimaregelung sind andere Kriterien zu beachten. Als übergeordnete Regelgröße fungiert die Höhe des Unterdrucks. Dieser wird im Wesentlichen durch den Öffnungsgrad der Zulufteintrittsöffnung und Regelung der Abluftmenge beeinflusst. Durch Veränderung des Unterdrucks wird unter anderem die Luftaustauschrate, die Temperatur im Stall, die Luftgeschwindigkeit als auch die Luftfeuchtigkeit beeinflusst. Darüber hinaus werden der Sauerstoffgehalt und die Schadstoffbelastung beeinflusst. Wichtig ist hierbei die Tatsache, dass die oben genannten Luftparameter in einem nicht linearen Verhältnis zueinander stehen und sich gegenseitig beeinflussen, da es nicht ausreicht, den Stall in einem konstanten festen Unterdruck auszulegen. Es ist hierbei erforderlich, dass eine entsprechende Regeleinheit für jeden Stall individuell programmiert werden muss. Dabei müssen auch die äußeren Umstände wie Winter-, Sommer-, Tag- und Nachttemperaturen als auch Windverhältnisse und unterschiedliche Luftfeuchtigkeiten der äußeren Luftfeuchte berücksichtigt werden. Für ein optimales Stallklima ist ein konstanter Sollwert in keinem Fall ausreichend. Weiterhin ist es notwendig, dass mittels mehrerer Sensoren, welche an unterschiedlichen Stellen im Stall angebracht sind, die wesentlichen Luftparameter erfasst und entsprechende Regelwerte an die Steuerung weitergeleitet werden. Diese Regelwerte bewirken im Zusammenhang mit der Programmsteuerung eine optimale Luftführung und somit eine gesundes Klima für Mensch und Tier im Stallgebäude.

Bei der Unterflurabsaugung 17 wird die mit Ammoniak angereichte Luft den Güllekeller nicht verlassen, sondern direkt daraus transportiert. Diese abgesaugte, schadstoffhaltige Luft wird durch einströmende Zuluft 19, 21 kontinuierlich ersetzt. Es ist möglich, diese besonders schadstoffhaltige Luft mittels eines entsprechenden Filters oder Luftwäschers vor Austritt in die Außenluft entsprechend zu reinigen. Da bei der Unterflurabsaugung ständig Luft aus dem Güllekeller kontinuierlich abgesaugt wird, kann die Luft aus dem Bereich des Güllekellers nicht in den Stallinnenraum gelangen und entsteht damit eine erhebliche Reduzierung der sonst üblichen Geruchsbelästigung im Stall, insbesondere Schweinestall.

Bei der Unterflurabsaugung kann auch vorgesehen werden, dass im Güllekeller eine Schwimmvorrichtung vorgesehen ist, auf welcher ein der Länge nach veränderlicher Trichter gebildet ist, wobei zwischen dem Trichter und der Schwimmvorrichtung selbst ein Abstand zugelassen ist, welcher seinerzeit jedoch konstant ist, wenn sich der Schwimmer auf- und ab bewegt. Wird dieser Trichter an das Absaugsystem angeschlossen, so wird unabhängig vom Schwimmerstand, also der Befüllung des Güllekellers mit entsprechender Gülle, stets die Luft durch den Spalt zwischen dem Trichter und dem Schwimmer abgesaugt und kann nach außen geführt werden.

## Patentansprüche

1. Stall für Nutztiere, bestehend aus zwei Baueinheiten, nämlich einem Stallgebäude und einer Stallinnenzelle (2), wobei dass Stallgebäude die Stallinnenzelle (2) umgibt und im Stallgebäude ein erster Innenraum und in der Stallinnenzelle (2) ein zweiter Innenraum ausgebildet ist, wobei der erste und der zweite Innenraum durch eine Wandung der Stallinnenzelle voneinander getrennt sind und der zweite Innenraum derjenige ist, in welchem das Nutzvieh gehalten wird, wobei das Stallgebäude aus gut wärmeisolierenden Baumaterial gebildet wird, während wenigsten ein Teil der Wandung der Stallinnenzelle eine gute Wärmeleitfähigkeit aufweist.

2. Stall nach Anspruch 1,
**dadurch gekennzeichnet, dass** zwischen der Innenwandung des Stallgebäudes und der Außenwandung der Stallinnenzelle der erste Raum (4, 5) ausgebildet ist, welcher oberseits der Stallinnenzelle als auch wenigstens an einer Seite der Stallinnenzelle ausgebildet ist.

3. Stall nach einem der vorhergehenden Ansprüche,
**dadurch gekennzeichnet, dass** der erste Innenraum aus einem Wandhohlraum (4) seitlich zwischen der Stallinnenzelle und der Innenwandung des Stallgebäudes und aus einem Dachgiebelraum (5) besteht.

4. Stall nach Anspruch 3,
**dadurch gekennzeichnet, dass** das Stallgebäude im Bereich des Wandhohlraums (4) wenigstens eine Öffnung zum Durchlass von frischer Zuluft (11) aufweist, wobei diese Zuluft in den Wandhohlraum in den Dachgiebelraum (5) des ersten Innenraums gelenkt und dort bevorzugt zwischengelagert wird.

5. Stall nach Anspruch 4,
**dadurch gekennzeichnet, dass** in den ersten Innenraum gelenkte Zuluft (11) während der Verweilzeit im Bereich des Dachgiebelraums (5) erwärmt wird und die zu benötigte Wärme über die Wandung der Stallinnenzelle (2) zugeführt wird.

6. Stall nach einem der vorhergehenden Ansprüche,
**dadurch gekennzeichnet, dass** die Decke der Stallinnenzelle (2) als Zwischendecke (7) ausgeführt ist, welche bevorzugt aus einem glatten, gezackten, gewellten oder trapezförmig geformten Material oder einem anderen Material besteht, welches eine vergleichsweise große Oberfläche und damit ein guter Wärmedurchsatz bedingt.

7. Stall nach einem der vorhergehenden Ansprüche,
**dadurch gekennzeichnet, dass** der Stallinnenzelle ein Absaugsystem (16, 17, 18) zugeordnet ist, welches Luft aus der Stallinnnenzelle (2) absaugt und nach draußen außerhalb des Stalls führt.

8. Stall nach Anspruch 7,
**dadurch gekennzeichnet, dass** zwischen dem ersten Innenraum und dem zweiten Innenraum Zulufteintrittsöffnungen (20) vorgesehen sind, durch welche im Dachgiebelraum vorgewärmte Zuluft (19) in den zweiten Raum aufgrund dessen im zweiten Raum bestehenden Unterdrucks strömen kann.

9. Stall nach Anspruch 8,
**dadurch gekennzeichnet, dass** in der Stallinnenzelle (2) wenigstens ein Gang (10) ausgebildet ist und die Zuluft Eintrittsöffnungen (20) in der Zwischendecke (7) der Stallinnenzelle bevorzugt oberhalb des Gangs ausgebildet sind.

10. Stall nach Anspruch 9,
**dadurch gekennzeichnet, dass** die Zulufteintrittsöffnungen (20) verschließbar oder in einem gewünschten Maß geöffnet werden können, um darüber das Volumen der einzuströmenden Luft (19) mengenmäßig zu steuern.

11. Stalleinrichtung nach Anspruch 9 oder 10,
**dadurch gekennzeichnet , dass** der Gang (10) im Bereich der Stallinnenzelle (2) bevorzugt im Bodenbereich und/oder im Seitenbereich des Ganges lufttundurchlässig ist.

12. Stalleinrichtung nach Anspruch 10,
**dadurch gekennzeichnet, dass** mittels des Öffnungsgrades der Zulufteintrittsöffnung (20) das Volumen des nicht in die Stallinnenzelle (2) einströmenden Frischluft (11) eingestellt wird.

13. Stalleinrichtung nach Anspruch 8,
**dadurch gekennzeichnet, dass** das Volumen in die Stallinnenzelle (2) eintretende Frischluft (11) durch einziehen des Absaugvolumens der Absaugeinrichtung (16, 17, 18) eingestellt wird.

## Claims

1. Barn for livestock comprising two constructional units, namely a barn building and a barn inner cell (2), wherein the barn building surrounds the barn inner cell (2) and a first internal space is formed in the barn building and a second internal space is formed in the barn inner cell (2), wherein the first and the second internal spaces are separated from one another by a wall of the barn inner cell and the second internal space is that in which the livestock is housed, wherein the barn building is constructed from building material having good thermal insulation properties, while at least a part of the wall of the barn inner cell has a good thermal conductivity.

2. Barn according to claim 1,
**characterized in that** the first space (4,5) is formed between the internal wall of the barn building and the external wall of the barn inner cell, which space is formed above the barn inner cell and also at least on one side of the barn inner cell.

3. Barn according to one of the preceding claims,
**characterized in that** the first internal space comprises a wall hollow space (4) on the side between the barn inner cell and the internal wall of the barn building, and a roof gable space (5).

4. Barn according to claim 3,
**characterized in that** the bam building has at least one opening in the region of the wall hollow space (4) for allowing through fresh intake air (11), wherein this intake air is directed in the wall hollow space into the roof gable space (5) of the first internal space and preferably intermediately stored there.

5. Barn according to claim 4,
**characterized in that** intake air (11) directed into the first internal space is heated during the dwell time in the region of the roof gable space (5) and the heat required is supplied via the wall of the barn inner cell (2).

6. Barn according to one of the preceding claims,
**characterized in that** the ceiling of the barn inner cell (2) is constructed as an intermediate ceiling (7) which is preferably made of a smooth, serrated, corrugated or trapezoidally shaped material or another material which results in a comparatively large surface area and therefore a good heat throughput.

7. Barn according to one of the preceding claims,
**characterized in that** an extraction system (16, 17, 18) which extracts air from the barn inner cell (2) and conducts it outwards outside the barn is assigned to the barn inner cell.

8. Barn according to claim 7,
**characterized in that** between the first internal space and the second internal space there are provided intake air entry openings (20) through which intake air (19) preheated in the roof gable space can flow into the second space due to the reduced pressure thereof in the second space.

9. Barn according to claim 8,
**characterized in that** at least one passage (6) is formed in the barn inner cell (2) and the intake air entry openings (20) in the intermediate ceiling (7) of the barn inner cell are preferably formed above the passage.

10. Barn according to claim 9,
**characterized in that** the intake air entry openings (20) can be closable or can be opened to a desired extent in order to control quantitatively via this means the volume of air (19) flowing in.

11. Barn installation according to claim 9 or 10,
**characterized in that** the passage (6) in the region of the barn inner cell (2) is impermeable to air preferably in the base region and/or in the side region of the passage.

12. Barn installation according to claim 10,
**characterized in that** the volume of fresh air (11) which does not flow into the barn inner cell (2) is adjusted by means of the degree of opening of the intake air entry opening (20).

13. Barn installation according to claim 8,
**characterized in that** the volume of fresh air (11) entering the barn inner cell (2) is adjusted by reducing the extraction volume of the extraction device (16, 17, 18).

## Revendications

1. Étable pour animaux d'élevage, constituée de deux unités de construction, à savoir un bâtiment d'étable et une cellule intérieure d'étable (2), le bâtiment d'étable entourant la cellule intérieure d'étable (2), un premier local intérieur étant formé dans le bâtiment d'étable et un second local intérieur étant formé dans la cellule intérieure d'étable (2), le premier et le second local intérieur étant séparés l'un de l'autre par une cloison de la cellule intérieure d'étable, et le second compartiment intérieur est celui dans lequel les animaux d'élevage sont hébergés, dans lequel le bâtiment d'étable est réalisé avec un matériau de construction présentant de bonne qualité d'isolation thermique, cependant qu'une partie au moins de la cloison de la cellule intérieure d'étable présente une bonne conductivité thermique.

2. Étable selon la revendication 1, **caractérisée en ce que** le premier local (4, 5) est réalisé entre la paroi intérieure du bâtiment d'étable et la paroi extérieure de la cellule intérieure d'étable, ledit local étant réalisé du côté supérieur de la cellule intérieure d'étable ainsi que sur au moins un côté de la cellule intérieure d'étable.

3. Étable selon l'une des revendications précédentes, **caractérisée en ce que** le premier local intérieur est constitué par une cavité de paroi (4) latéralement entre la cellule intérieure d'étable et la paroi intérieure du bâtiment d'étable, et par un local en pignon de toiture (5).

4. Étable selon la revendication 3, **caractérisée en ce que** le bâtiment d'étable présente dans la région de la cavité de paroi (4) au moins une ouverture pour le passage d'air frais (11), ledit air frais vers la cavité de paroi étant dévié vers le local en pignon de toiture (5) du premier local intérieur, et étant de préférence stocké de façon intermédiaire dans celui-ci.

5. Étable selon la revendication 4, **caractérisée en ce que** l'air frais (11) dévié vers le premier local intérieur est échauffé pendant la durée de séjour dans la région du local en pignon de toiture (5), et la chaleur nécessaire est apportée via la cloison de la cellule intérieure d'étable (2).

6. Étable selon l'une des revendications précédentes, **caractérisée en ce que** le plafond de la cellule intérieure d'étable (2) est réalisé sous forme de plancher intermédiaire (7) qui est formé de préférence en un matériau lisse, en dents de scie, en ondulations ou en forme de trapèze, ou en un autre matériau qui présente une surface comparativement importante et ainsi une bonne transmissibilité thermique.

7. Étable selon l'une des revendications précédentes, **caractérisée en ce qu'**un système d'aspiration (16, 17, 18) est associé à la cellule intérieure d'étable, ledit système aspirant l'air hors de la cellule intérieure d'étable (2) et l'amenant vers l'extérieur hors de l'étable.

8. Étable selon la revendication 7, **caractérisée en ce que** des ouvertures d'entrée d'air frais (20) sont prévues entre le premier local intérieur et le second local intérieur, ouvertures à travers lesquelles l'air frais préchauffé dans le local en pignon de toiture (19) peut s'écouler vers le second local en raison de la dépression régnant dans le second local.

9. Étable selon la revendication 8, **caractérisée en ce qu'**au moins un couloir (10) est réalisé dans la cellule intérieure d'étable (2) et **en ce que** des ouvertures d'entrée (20) pour l'air frais sont réalisées dans le plancher intermédiaire (7) de la cellule intérieure d'étable et de préférence au-dessus du couloir.

10. Étable selon la revendication 9, **caractérisée en ce que** les ouvertures d'entrée d'air frais (20) peuvent être fermées ou ouvertes dans une mesure souhaitée, afin de commander le volume d'air (19) entrant.

11. Étable selon l'une ou l'autre des revendications 9 et 10, **caractérisée en ce que** le couloir (10) dans la région de la cellule intérieure d'étable (2) est imperméable à l'air, de préférence dans la zone du sol et/ou dans la zone du côté du couloir.

12. Étable selon la revendication 10, **caractérisée en ce que** le volume de l'air frais (11) qui ne s'écoule pas vers la cellule intérieure d'étable (2) est réglé au moyen du degré d'ouverture de l'ouverture d'entrée d'air frais (20).

13. Étable selon la revendication 8, **caractérisée en ce que** le volume d'air frais (11) entrant dans la cellule intérieure d'étable (2) est réglé par ajustement du volume aspiré par le système d'aspiration (16, 17, 18).
